# EUROPEAN PATENT APPLICATION

(11) **EP 2 202 938 A1**
(43) Date of publication of application: **30.06.2010**
(21) Application number: 08306019.4
(22) Date of filing: 24.12.2008
(51) Int. Cl.: H04L 29/06

(54) **Protection against flooding attacks in a network**

(71) Applicant: Mitsubishi Electric R&D Centre Europe B.V., 1119 NS Schiphol Rijk (NL); Mitsubishi Electric Corporation, Tokyo 100-8310 (JP)
(72) Inventor: Cossec, Julien, 35700 Rennes (FR); Mangin, Christophe, 35590 L'Hermitage (FR)
(74) Representative: Cabinet Plasseraud

(57) **Abstract**

A SIP-based ommunication service is offered to at least one terminal (13) in a network comprising a network function for said service. At the terminal level, a register request message (22) is sent to the network function; this register request message indicating a secret parameter associated to the terminal. Then, an acknowledgement (24) of registration is received.
In this context, at least some received messages are controlled based on the secret parameter.

## Description

### BACKGROUND OF THE INVENTION

### 1. Technical Field

The present invention relates generally to communication networks, and more particularly to limit some attacks which can be done in these types of networks.

### 2. Related Art

Some communication networks allow setting up and tearing down multimedia communication sessions, such as voice and video calls over Internet. These types of communication are generally based on the Session Initiation Protocol (SIP) protocol.

Any terminal which is in a communication over the Internet network can be a target of different types of attack. For instance, a first terminal of this communication network can be attacked by a second one which sends toward this first terminal a lot of messages to trigger an overflow of messages. To prevent the first terminal against this type of attack, it is possible to place a network device between the first and second terminals, in order to filter the messages coming from the second terminal. Such a filter is based on the analysis of an identifier of the second terminal, which can be very complex and expensive to perform on SIP messages. Indeed, the complete SIP message must be parsed to obtain the identifier of the second terminal, meaning the calling party. Consequently, the network device must have a sufficient capacity of computation to carry out such a parsing of all SIP messages. Indeed, SIP is a text-based protocol, such as Hyper-Text Transfer Protocol (HTPP). The parsing of such a protocol requires an important amount of resources.

A SIP terminal, and more particularly an embedded SIP User Agent, is very vulnerable to SIP flooding attacks and denial of services attacks. A basic attack against a SIP User Agent consists in flooding the target with SIP request messages. As the parsing is really resources consuming, this simple attack can be really efficient and may lead to a denial of service. On an embedded SIP User Agent, as a SIP phone or a Home Gateway, this denial of service will affected the voice service, but also the other services like http, email ...

### SUMMARY OF THE INVENTION

In view of the foregoing, there is a need for increasing the protection of terminals communicating over Internet network.

In a first aspect, the invention proposes a method of managing a communication service offered to at least one terminal in a network comprising a network function for said service, said method comprising the following steps at the terminal level:
a) sending a register request message to the network function, said register request message indicating a secret parameter associated to the terminal; and
b) receiving an acknowledgement of registration;
wherein at least some received messages are controlled based on said secret parameter.

Based on these features, advantageously, the network function and a terminal, which is registered to this network function, share a same secret parameter which is associated to the terminal. On the basis of the shared secret parameter, the terminal will be able to determine easily if a received message comes from the network function, which knows the same secret parameter. Indeed, when a message, which is destined to the terminal, is received by the network function, this network function can introduce the secret parameter into the message before transmitting it to the terminal. Thus, the terminal can deduce that the received message comes from the network function when the received message indicates the shared secret parameter. The registration step is a relevant way for sharing this secret parameter between the terminal and the network function because it corresponds to the first contact of the terminal with the network.

Moreover, generally in a network architecture comprising a network function; all messages which go through the network function are controlled before being transmitted to a terminal. Such a network function allows securing messages destined to a terminal.

In these conditions, the terminal can be trusting in messages coming from the network function, and the shared secret parameter allows determining easily when a received message comes from the network function.

According to one embodiment of the invention, the terminal does not have to consume a lot of resources to parse all received messages, especially for SIP messages. Indeed, even if no parsing is performed for messages received from the network function, the terminal is protected against some attacks.

In one embodiment of the present invention, the network function can comprise one register function which is more particularly in charge of handling a registration step of a terminal to the communication service and one proxy function, which is in charge of handling messages destined to a registered terminal. The register function can be co-located on a same network device with the proxy function or not. No limit is associated to the physical implementation of network register and proxy functions.

The present invention can be applied advantageously to a network wherein at least a type of messages destined to the terminal goes through the network function. For instance, in the context of SIP protocol, this type of message can correspond to SIP request message.

In this condition, the method can further comprise the following steps at the terminal level:
- receiving a message of said type ; and
- if said message does not comprise the secret parameter, discarding the received message.

Thus, in this context, when the terminal receives a message of the determined type directly without going through the network function, it corresponds to an abnormal situation.

Here, the features stated above allow determining easily if the situation is abnormal or not. As a matter of fact, a secret parameter is shared between the registered terminal and the network function. Consequently, the network function can introduce the secret parameter in each message destined to the terminal. Thus, when the terminal receives a message which is expected to go through the network function, it can control if this message comprises the secret parameter. If a message is expected to come from the network function and it does not include the secret parameter, the situation is abnormal and then the terminal can advantageously discard such a message.

When a received message includes a secret parameter, the terminal can deduce, firstly, that the received message went through the network function like expected, and secondly, that the received message has been already controlled by the network function.

The determined type of messages which are expected to go through the network function can correspond to signalling messages and more particularly to SIP request messages when the SIP protocol is used.

When the communication service offered in the network corresponds to a service based on SIP protocol, the SIP network function allows registered terminals to upload their current locations to be used by the network function. The SIP register request message is generally the first message sent by a SIP terminal when it is switched on. When the registration process is performed between the terminal and the network function, an identifier of the terminal, as a SIP URI ('Uniform resource Identifier'), or address of registration, which is classically used in the contact header of the register request message, is bound to a physical address of the terminal. The URI or address of registration can correspond classically to a public parameter, like a user name or a phone number. Thus, when the network function receives a message destined to the terminal, it will then forward this message to the bound physical location of the terminal.

In one embodiment of the present invention, the mechanism proposed here can consist in using any secret parameter during the registration step instead of using the public parameter, like user name or phone number which is classically used. The secret parameter can be generated randomly. This secret parameter can be considered as a random address of registration (AOR). This random AOR can comprise a random part as only a part of the AOR, or the random part can represent the complete the AOR.

The term 'terminal' means any device which is able to terminate the communication protocol used in the network. In the context of SIP protocol, a terminal can correspond to a 'User Agent' as referred in the RFC3261.

Such a terminal can be, for instance, a telephone, a computer, a gateway, or a PABX (for 'Private Automatic Branch Exchange').

Advantageously, a terminal can determine easily if a received message comes from a proxy function or not, and can estimate the risk to handle this received message. Sometimes, it can decide to discard a received message, notably when the received message is expected to come from the network function although it is not the case. Thus, a flooding attack can be avoided.

For instance, if all signalling messages are expected to come from the network function, and particularly the SIP request messages, all signalling messages which do not comprise the secret parameter can be advantageously and easily discarded at the terminal level. In these conditions, the terminal can easily be protected against a flooding attack based on sending SIP request messages.

When the secret parameter is introduced at the beginning of the SIP message, the terminal can decide to discard it without parsing the whole SIP message. Thus, the resources used at the terminal level are not blocked by parsing operations. The effects of the denial of services by resources exhaustion are reduced and terminal's services should not be affected.

According to one embodiment, the service is offered in the network based on a Session Initiation Protocol, and, the secret parameter is expected to be included in a SIP contact field of request messages.

Thus, the terminal is able to detect easily if a received request message comes from the network function or not.

The type of messages, destined to the terminal and going through the network function, can be a SIP request message type, and the terminal performs step /2/ only if the first 4 bytes are uppercase letters.

In these conditions, advantageously, the terminal pre parses the received message before determining if this message is coming from the network function. Indeed, as the terminal knows that all request messages come from the network function, firstly it tries to determine if the received message is a request message. For this purpose, it determines if the first four bytes of the SIP received message are uppercase letters. If it is the case, the received message is probably a request message.

In one embodiment, the method of managing a service further comprises the following steps at the terminal level:
- detecting a flooding attack; and
- sending a de-register request message to the network function in order to de register the terminal with the secret parameter.

Thus, advantageously, upon detection of a flooding attack, the terminal manages a de registration step with the network function. A flooding attack means that the secret parameter is known by a malicious device. During this de registration step, the association between the terminal and the secret parameter is erased.

Thus, in case of a huge SIP requests flooding attack, the terminal can carried out a de-registration step of its current secret parameter, in order to allow no SIP services available.

Advantageously, a de-register request message can indicate information relative to an originator of the flooding attack and/or relative to a cause of flooding attack. Thus, the network function is informed about a suspect. Such information can be

A flooding attack can be detected based on reception of a given number of malicious messages.

Indeed, when at least a type of messages destined to the terminal goes through the network function (10);
said method can further comprise the following steps at the terminal level:
/1/ receiving a message of said type; and
/2/ if said message does not comprise the secret parameter, discarding the received message;
wherein a flooding attack is detected upon reception of a given number of messages discarded at step /2/.

In a second aspect, the invention proposes a method of managing a service offered a communication service offered to at least one terminal in a network comprising a network function for said service, said method comprising the following steps at the network function level:
a) receiving a register request message; said register request message indicating a secret parameter; and
b) storing the secret parameter in association with the terminal and sending an acknowledgement of registration to the terminal;
wherein said secret parameter is introduced in messages destined to the terminal.

Thus, the network function is in charge to manage the registration to the communication service and to store the secret parameter in order to share this secret with the registered terminal.

As the network function stores the secret parameter associated to the terminal, the method of managing a communication service can comprise the following steps at the network function level:
c) receiving a message destined to the terminal;
d) introducing into the message the secret parameter associated to the terminal;
e) sending the message obtained at step b) to the terminal.

Thus, all messages which are destined to the terminal and which go through the network function indicate the secret parameter. In these conditions, the terminal can easily determine if the received message comes from the network function.

A third aspect of the invention relates to a terminal comprising means for carrying out the method according to the first aspect.

A fourth aspect of the invention relates to a network device comprising means for carrying out the method according to the second aspect.

### BRIEF DESCRIPTION OF THE DRAWINGS

Further features and advantages of the present invention will become more apparent from the description below. The latter is given purely by way of illustration and should be read in conjunction with the appended drawings, of which:
- Figure 1 illustrates a communication network according to one embodiment of the present invention;
- Figure 2 illustrates a registration step of a terminal according to one embodiment of the present invention;
- Figure 3 illustrates the usage of the secret parameter according to one embodiment of the present invention;
- Figure 4 illustrates a SIP stack according to one embodiment of the present invention;
- Figure 5 illustrates a de-registration process according to one embodiment of the present invention; and
- Figure 6 illustrates a terminal, a register device and a proxy device according to one embodiment of the present invention.

### DESCRIPTION OF PREFERRED EMBODIMENTS

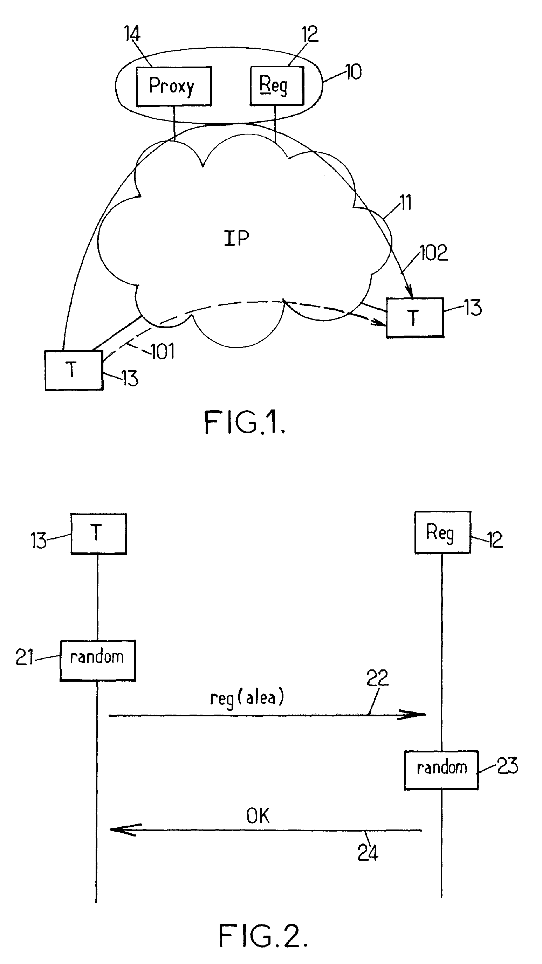

Figure 1 illustrates a communication network according to one embodiment of the present invention.

This communication network comprises a network function 10 and a plurality of terminals 13 able to communicate over an IP network 11. The network function 10 comprises a register function 12 and a proxy function 14, which can be co-located in a same network device, or can be located on different network devices which are able to communicate together. There is no limitation relative to the network architecture. The following sections make reference to the register and proxy functions globally, only for illustration purpose.

Below, as an exemplary embodiment, the communication over the IP network is based on the SIP protocol as defined in RFC3261.

The network register function 12 is adapted to handle a registration step of a terminal 13 which wants to communicate through the network 11 using SIP protocol. The proxy function 14 is adapted to receive at least a type of signalling messages from a terminal and to transmit it via the network 11 to a terminal which is registered according to one embodiment of the present invention.

In one embodiment, after registration step, some messages destined to a terminal, are expected to go through the network via the way 102. The present invention allows detecting a flooding attack based on messages which are expected to go through the network function and which go through the way 101, meaning directly between two terminals 13.

Figure 2 illustrates a registration step of a terminal according to one embodiment of the present invention.

A terminal 13 knows a random parameter which is kept as a secret. It is possible to plan that the terminal 13 generates this random parameter at step 21. But, this random parameter can be generated by any other way.

The terminal sends a register request message 22 which indicates this random parameter to the register function 12. This register function 12 stores this random parameter in association with this terminal in memory and responds by sending back a SIP message 200 OK in order to confirm the registration step.

The random parameter can be combined with a public parameter of the terminal, like user name or phone number for instance.

In one embodiment, the message 22 can be as follows:
REGISTER sip:registrar.biloxi.com SIP/2.0
ViaSIP/2.0/UDP bobspc.biloxi.com:5060;branch=z9hG4bKnashds7
Max-Forwards: 70
To: Bob <sip:bob@biloxi.com>
From: Bob <sip:bob@biloxi.com>;tag=456248
Call-ID: 843817637684230@998sdasdh09
CSeq: 1826 REGISTER
Contact: <sip:11 ff04d59d394bd5 @ 192.0.2.4:5060>
Expires: 7200
Content-Length: 0

In this embodiment, the secret parameter is sent to the register function 12 in the 'contact' field of a SIP register request message. The secret parameter corresponds to a combination of a random parameter and a physical address. This field indicates here, for instance:
- a random part:11 ff04d59d394bd5;
- a physical address: 192.0.2.4:5060.

After this registration step, the terminal 13 and the network register function 12 share the same secret parameter. This shared information allows them to guarantee protection against some attacks, like SIP flooding attack.

Indeed, after this registration step, the proxy function 14, which is classically linked to the register function 12, can introduce the shared secret parameter into all request messages destined to the terminal 13 and going through the proxy function. In this embodiment, the information filled in the contact field is a random AOR, which will be included, for instance, in 'contact' field in all messages which are destined to the terminal 13 and which are going through the proxy function 14.

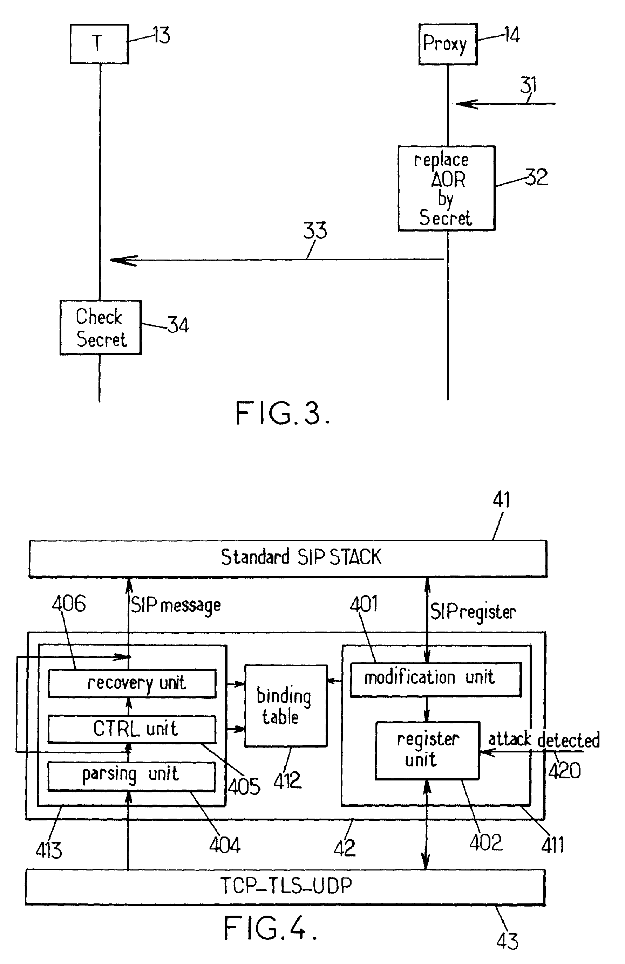

Figure 3 illustrates the use of the secret parameter according to one embodiment of the present invention, after the registration step.

Classically, the network register function 12 and the network proxy function 14 are associated together. Consequently, the proxy function can access to the information stored by the register function, and notably to the secret parameter, meaning here in this exemplary embodiment the random address of registration AOR, which is stored in association to the registered terminal. When the proxy function 14 receives a message 31 destined to the terminal 13, it finds the address of registration AOR stored when this terminal registered itself, and it replaces the corresponding information received in the message 31 by this address of registration AOR, at step 32.

After this step 32, the proxy function 14 sends to the terminal a message 33 indicating the secret parameter, meaning for instance the address of registration used for the registration step, as illustrated on figure 2. Consequently, when the terminal 13 receives this message 33, it is able to determine if this message comes from the proxy function 14 or not. For that purpose, at step 34, the terminal controls if the secret parameter is comprised in the message 33 or not.

This controlling step carried out at the terminal level is easy and makes the terminal 13 sure that the received message 33 transited through the proxy function 14. When a message is received by the proxy function, it is controlled. The level of controlling applied by a proxy function can depend on the capacity of the device where this function 14 is implemented. But, a proxy function carries out a controlling step on each received message. Consequently, it is very secure to know that the received message comes from the proxy function. Moreover, in some networks, the proxy function 14 applies a high level of controlling on received messages, and in these conditions, the terminal can handle the received message 33 in a complete trusting conditions.

In any case, knowing that a received message comes from the proxy function, the terminal can handle it in a trusting manner.

Such features allow increasing the protection against flooding attacks.

Applying a filter on SIP messages is generally not easy, notably because of the fields are not ordered in a SIP message. Consequently, it is difficult to find the searched information in a SIP message. Here, preferably, the address of registration (secret parameter) used according to one embodiment of the present invention is filled at the beginning of SIP messages, by the proxy function 14. Thus, at reception on the terminal 13, it is very easy to control if the received message begins with the address of registration provided during the registration step, for instance.

Figure 4 illustrates a SIP stack for a terminal, according to one embodiment of the present invention. Such a SIP stack comprises a TCP-TLS UDP layer 43, a protection layer 42 and a standard SIP stack 41. Stated otherwise, a new layer, destined to increase the protection of a terminal according to one embodiment of the present invention, is introduced between a classical TCP layer 43 and a classical SIP stack 41.

The protocol stack comprises the protection layer 42 between a lower layer 43 and an upper layer 41; a binding table 412 being adapted to store an association of a secret parameter and a public parameter for the considered terminal.

In one embodiment, the protection layer receives a request register message including a public parameter classically used in this type of message. Then, the protection layer replaces this public parameter by a secret parameter and transmits this message to the lower layer. The binding table stores an association of the public parameter and the secret parameter. Thus, it is possible to perform the reverse replacement, meaning replacing the secret parameter by the public parameter in some received messages, before transmitting them to the upper layer.

The protection layer 42 comprises:
- a register block 411 adapted to introduce said secret parameter into a register request message received from the upper layer and to be sent to a network function through the lower layer;
- a processing block 413 comprising:
   - a controlling unit 405 adapted to control if a message received by the terminal includes the secret parameter;
   - a recovery unit 406 adapted to replace in said message the secret parameter by said associated public parameter before sending said message to the upper layer.

In one embodiment, the register block 411 is in charge of handling messages corresponding to the registration step as described above. This register block 411 includes a modification unit 401 and a register unit 402.

The processing block 413 is in charge of handling reception of SIP messages. This block 413 can comprise a parsing unit 404, a controlling unit 405 and a recovery unit 406. The parsing unit 404 can be an optional unit to allow increasing performances.

The binding table 412 is used by both blocks 411 and 413. When the public and secret parameters correspond to an AOR, the binding table 412 binds both parameters. This binding table 412 is feed by the register unit 402 of the register block 411, during the registration step, and can be interrogated by the controlling unit 405 and the recovery unit 406 of the processing block 413, when SIP messages are received after the registration step. This binding table is useful, notably when the terminal 13 handles a plurality of registration steps with respective different secret parameters. Indeed, no limitation is attached to the number of registration steps with different secret parameters that can be performed by one terminal according to one embodiment of the present invention.

A register request message 22, sent from the terminal 13 to the network register function 12 in the network, can be handled at the terminal 13 as described below.

SIP register request message is received from the SIP stack 41 by the modification unit 401. The modification unit 401 fills in the contact 'field' of the register request message received from the SIP stack 41, with the secret parameter which corresponds to a random AOR. As stated above, the secret parameter can be a random parameter either partially or completely. The secret parameter can be a combination of a random parameter and a user name or a phone number, for instance.

In one embodiment of the present invention, the information initially filled in the 'contact' field of the register request message received from the SIP stack, is replaced by the random AOR, and an association between this initial information and the random AOR is stored in the binding table 412.

The register request message 22 indicating the secret parameter is then transmitted from the modification unit 401 to the register unit 402, which is in charge of handling an interface with the network register function 12. The register unit 402 sends this message 22 to the network register function 12.

The register unit 402 can also manage an 'Expire' header of the register request message, when this field provided by the SIP stack 41 is considered as too long. In this case, the register unit 402 can manage the re-registration, eventually with a new secret parameter, meaning with a new random AOR in one embodiment.

The register unit 402 is also able to receive events 420 from other elements. These events can inform it that an attack has been detected. In this case, the register unit 402 can decide to de-register the SIP User Agent and re-registers the SIP User Agent with a new random AOR.

At the end of a de-registration step, the terminal 13 receives a SIP OK 200 message 24. This message 24 is received by the register block 411 before being transmitted to the standard SIP stack 41.

SIP messages received at the terminal 13, other than those relative to the registration or de-registration purpose, are handled by the processing block 413. The parsing unit 404, an optional unit of the processing block, is in charge of analyzing the beginning of all new incoming SIP messages in order to be able to transmit to the controlling unit 405 the type of messages which are expected to come from the proxy function 14 and to transmit directly to the SIP stack 41 the other messages.

When the SIP request messages are expected to be transmitted to the controlling unit 405, the parsing unit is adapted to determine if the SIP message is a request message. In this case, the SIP message is transmitted to the controlling unit 405.

This controlling unit 405 interrogates the binding table 403 to control, at first, if the random AOR received in the SIP message corresponds to one AOR stored in the binding table. If not, the SIP message is discarded.

If it is the case, the SIP message is transmitted to the recovery unit 405. This unit is in charge of replacing the random AOR with the associated information stored in the binding table. In this embodiment, this information corresponds to the initial AOR of the terminal. Then, the SIP message is transmitted to the upper layer 41, standard SIP stack.

The following section describes in detail a control performed at the terminal level according to one embodiment of the present invention.

To limit the effects of a SIP flooding attack, a SIP User Agent can reject malicious SIP messages as soon as possible, without parsing the entire SIP message. The proposed mechanism consists in pre-parsing only the beginning of all messages received in a SIP socket of the terminal, and checking the type of SIP messages.

More precisely, if the message is a SIP response, the parsing unit can transmit it to the high level SIP stack 41. If the message is a SIP request, the parsing unit controls if the request AOR is equal to an authorized Address Of Registration. An authorized AOR corresponds to an AOR which is stored in the binding table 412.

If not, the message is early discarded; else it is transmitted to the high level SIP stack.

The parsing and filtering process can be applied as follows.

At first, the first 4 bytes of a message received on the SIP socket are parsed.

If the first 4 bytes are "SIP/", the message should be a SIP response. Consequently, it is transmitted to the high level SIP stack.

If the first 4 bytes are uppercase letters, the message should be a SIP request. In this case, a parsing method is applied.

If the first 4 bytes are neither "SIP/" or uppercase letters, the received message is discarded.

When the parsing method is applied, the AOR of this message is parsed byte per byte in order to determine if the AOR is equal to an active Address Of Registration. If it is the case, the message is transmitted to the recovery unit 406, else it is discarded.

The following examples illustrate this mechanism.

The SIP User Agent of the terminal 13 is registered with the AOR "sip:11ff04d59d394bd5@ 192.0.2.4:5060" according to one embodiment. The table below shows the first line of SIP messages received in the left column, the corresponding result of the block 413 in the central column and the reason of the result in the right column.

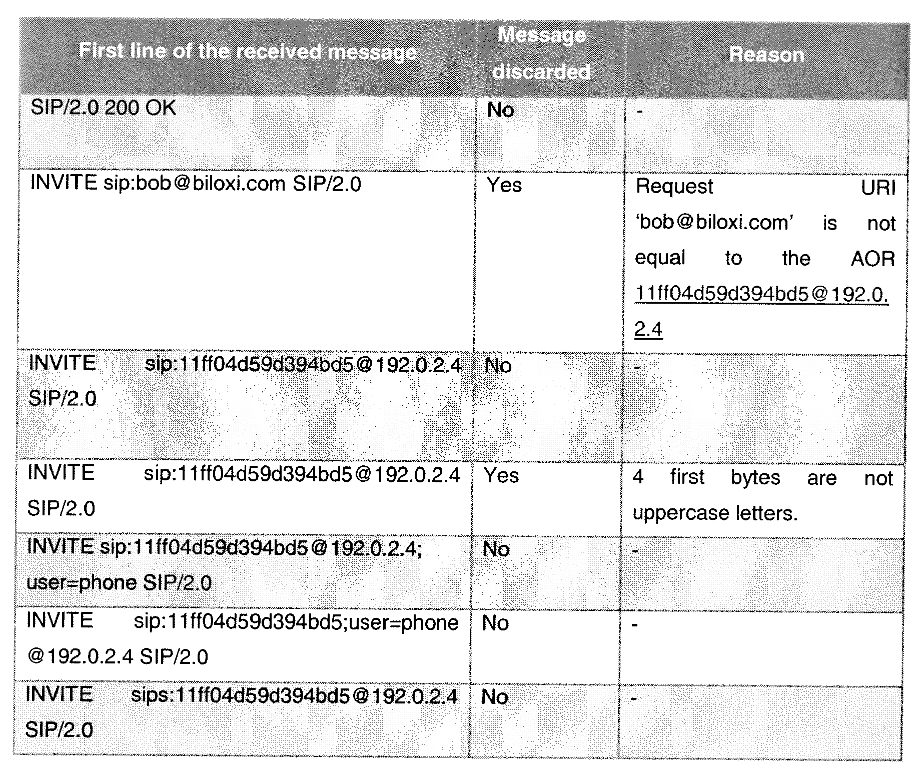

In the terminal 13, a SIP denial of service attacks can affect others services embedded, such as HTPP services. To protect these services in case of eventual attacks, the proposed mechanism consists in de-registering the SIP User Agent when a SIP attack is detected. This protection is based on a de-registration of a SIP user agent when an attack is detected. This protection can be performed advantageously even if the registration step of the corresponding terminal is a classical registration which is not like stated above, meaning without using any secret parameter. Indeed, the terminal 13 according to one embodiment is adapted to receive events regarding detected attacks.

The User Agent can detect several kinds of attacks with some simple verifications: TCP contexts opened, SIP dialog established, SIP request per seconds, CPU usage, memory usage, malformed SIP messages received, missing headers ... If these checks identify a threat, the User Agent can advantageously cancel its registration, meaning handle a de-registration, in order to protect non SIP services.

When the terminal 13 is registered according to one embodiment of the present invention in a context as illustrated above, the terminal can detect a flooding attack on messages expected to go through the network function, like request message type. For instance, when a given number of received messages are discarded because they are expected to comprise the secret parameter but they do not comprise it, the terminal can decide that it is a victim of a flooding attack.

In this case, the User Agent can de-register its current random AOR, and re-registers itself with a new random AOR. It is possible to make the User Agent waiting for a time period between de-registration and re-registration.

After de-registration, the previous random AOR becomes unacceptable and any SIP request message indicating this AOR will be discarded by the processing block 413.

Moreover, in order to inform the SIP network function, (proxy and register function) that the SIP User Agent detected an attack, specific SIP headers can be set in the de-register request message using a "Security-Alert" header and a "Security-Black-List" header.

The "Security-Alert" header can provide the reason of the User Agent's de-registration. This header allows informing the network function about the cause of the flooding attack. This header can be like below:
Security-Alert = "Security-Alert" HCOLON sec-alert-value *(COMMA sec-alert-value)
   where :
   sec-alert-value = sec-cause [SEMI sec-text]
      where :
      sec-cause = "cause" EQUAL 1*DIGIT
      sec-text = "text" EQUAL quoted-string

The value of the "cause" field can be as below:
100: INVITE request flooding
101: ACK request flooding
102: BYE request flooding
103: CANCEL request flooding
104: REGISTER request flooding

Such values make the network function able to know that the flooding attack is based on INVITE messages, or ACK messages, or BYE messages, or CANCEL messages, or Register request messages.

The "Security-Black-List" header can provide identification information about the originator of the attack. This information is sent to the network proxy/register function and allows informing the network function about the originator of the flooding attack. The originator of the attack can be identified by its physical address (IP address) or from its SIP URI, for instance.

The "Security-Black-List" header should be placed in SIP register request.
Security-Black-List = "Security-Black-List" HCOLON black-list-value
*(COMMA black-list-value)
where black-list-value = bl-source [ SEMI bl-time]
where bl-time = "time" EQUAL 1*DIGIT
bl-source = bl-addr / bl-from
where bl-addr = "addr" EQUAL host
bl-from = "from" EQUAL addr-spec

For instance, this header can indicate the following information:
Security-Black-List: addr=10.205.210.70:5060
Security-Black-List: addr=10.205.210.70:5060; time=3600
Security-Black-List: from=<sip:spam@biloxi.com>; time=3600
Security-Black-List: addr=10.205.210.70:5060; time=3600,
   from=<sip:spam@biloxi.com>; time=3600

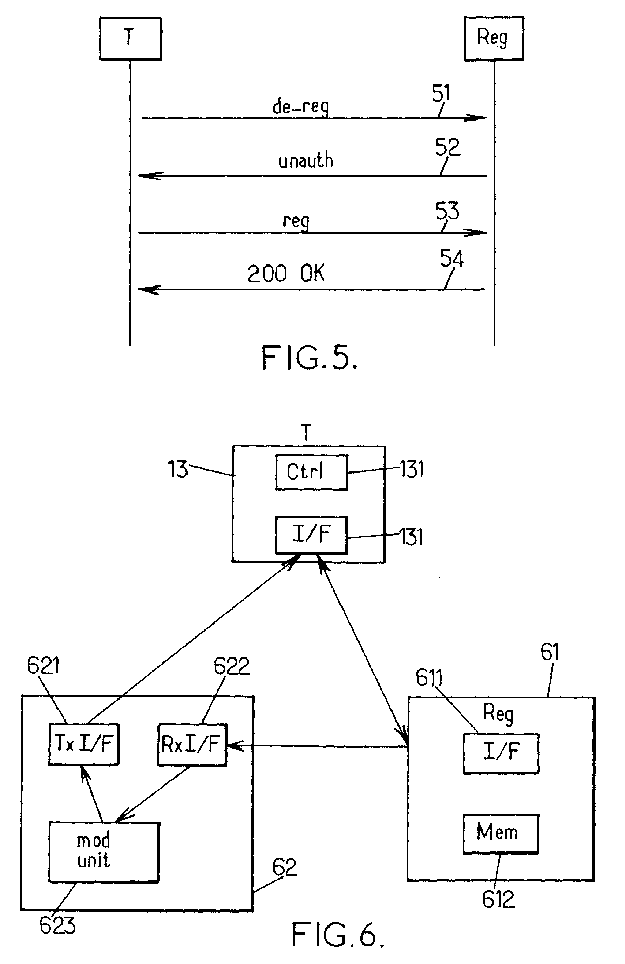

Figure 5 illustrates a de-registration process according to one embodiment of the present invention. No limitation is attached to the way to trigger such a de-registration process. It can be either triggered upon reception of events by the terminal, or triggered upon reception of a given number of messages to be discarded according to one embodiment.

When the terminal 13 detects an attack, it can decide to de-register itself to protect non SIP services for instance. When it decides to de-register itself, it sends a de-register request message 51. This message can be as follow:

| |
|---|
| REGISTER sip:registrar.biloxi.com SIP/2.0 |
| Via: SIP/2.0/UDP bobspc.biloxi.com:5060;branch=z9hG4bKnashds7 |
| Max-Forwards: 70 |
| To: Bob <sip:bob@biloxi.com> |
| From: Bob <sip:bob@bitoxi.com>;tag=456248 |
| Call-ID: 1j9FpLxk3uxtm8tn |
| CSeq: 1847 REGISTER |
| Contact: * |
| Expires: 0 |
| Security-Alert: cause=100; text="INVITE flooding attack detected" |
| Security-Black-List: addr=10.205.208.74:5060; time=3600 |
| Content-Length: 0 |

This message 51 indicates a star in the contact field, and it contains a 'Security-Alert' header and a 'Security-Black-List' header as described above. Actually, this message informs the network function 10 about the reason of de-registration and the probable malicious address.

In response to this message 51, the network registration function 12 sends an 'unauthorized' message 52 to the terminal.

This message can be as follow:

| |
|---|
| SIP/2.0 401 Unauthorized |
| Via: SIP/2.0/UDP bobspc.biloxi.com:5060;branch=z9hG4bKnashds7 |
| ;received=192.0.2.4 |
| To: Bob <sip:bob@biloxi.com>;tag=2493k59kd |
| From: Bob <sip:bob@biloxi.com>;tag=456248 |
| Call-ID: 1 j9FpLxk3uxtm8tn |
| CSeq: 1847 REGISTER |
| WWW-Authenticate: Digest realm="atlanta.example.com", qop="auth", |
| nonce="88df84f1cac4341aea9c8ee6cbe5a359", |
| opaque="", stale=FALSE, algorithm=MD5 |

This message acknowledges the reception of the message 51.

After reception of the unauthorized message 52, the terminal 13 sends a register request message 53 to the network function 10, more precisely to the network register function 12. This message can be as follow:

| |
|---|
| REGISTER sip:registrar.biloxi.com SIP/2.0 |
| Via: SIP/2.0/UDP bobspc.biloxi.com:5060;branch=z9hG4bKnashds7 |
| Max-Forwards: 70 |
| To: Bob <sip:bob@biloxi.com> |
| From: Bob <sip:bob@biloxi.com>;tag=ja743ks76zlfIH |
| Call-ID: 1 j9FpLxk3uxtm8tn |
| CSeq: 1848 REGISTER |
| Contact: * |
| Expires: 0 |
| Security-Alert: cause=11; text="INVITE flooding attack detected" |
| Security-Black-List: addr=10.205.208.74:5060; time=3600 |
| Authorization: Digest username="bob", realm="atlanta.example.com" |
| nonce="88df84f1 cac4341 aea9c8ee6cbe5a359", opaque="", |
| uri=" sip:registrar.biloxi.com", |
| response="ff0437c51696f9a76244f0cf1 dbabbea" |
| Content-Length: 0 |

In order to acknowledge this message 53, the network function 10 sends a 200 OK message, which can be as below:

| |
|---|
| Via: SIP/2.0/UDP bobspc.biloxi.com:5060;branch=z9hG4bKnashds7 |
| ;received=192.0.2.4 |
| To: Bob <sip:bob@biloxi.com>;tag=37GkEhwl6 |
| From: Bob <sip:bob@biloxi.com>;tag=ja743ks76zlfIH |
| Call-ID: 1j9FpLxk3uxtm8tn |
| CSeq: 1848 REGISTER |
| Contact: * |
| Expires: 0 |
| Content-Length: 0 |

After such a de-registration process, the terminal 13 can re-registers itself as it is described above according to one embodiment of the present invention.

Figure 6 illustrates a terminal 13, a register unit 61 and a proxy device according to one embodiment of the present invention. The register device and the proxy device can be located.

The terminal 13 is adapted to use a communication service offered in the network 11. This terminal comprises:
- an interface unit 131 adapted to send a register request message 22 to the network function; said register request message indicating a secret parameter associated to the terminal; and to receive an acknowledgement 24 of registration; and
- a control unit 132 adapted to control at least some received messages based on said secret parameter.
This control unit can correspond to the controlling unit 405.

When at least a type of messages destined to the terminal goes through the network function 10, the interface unit (131) can be adapted to receive a message of said type 33; and to discard said message, if it does not comprise the secret parameter.

A register device 61 is adapted to register a terminal 13 for a communication service offered in a network 11.

This register device 61 comprises:
- an interface unit 611 able to receive a register request message from the terminal; said register request message indicating a secret parameter and to send an acknowledgement of registration;
- a memory 612 adapted to store the secret parameter in association with the terminal.

Moreover Figure 6 illustrates a proxy device according to one embodiment of the present invention.

This proxy device 62 cooperates with the register device and comprises:
- a receiving interface 621 adapted to receive a message 31 destined to the terminal;
- a modification unit 622 adapted to provide a modified message 33 by introducing into said message 31 the secret parameter associated to the terminal; and
- a transmitting interface 623 adapted to send the modified message 33 to the terminal.

## Claims

1. Method of managing a communication service offered to at least one terminal (13) in a network (11) comprising a network function (10) for said service,
said method comprising the following steps at the terminal level:
a) sending a register request message (22) to the network function; said register request message indicating a secret parameter associated to the terminal; and
b) receiving an acknowledgement (24) of registration;
wherein at least some received messages are controlled based on said secret parameter.

2. Method of managing a communication service according to claim 1, wherein at least a type of messages destined to the terminal goes through the network function (10);
said method further comprising the following steps at the terminal level:
/1/ receiving a message of said type (33); and
/2/ if said message does not comprise the secret parameter (34), discarding the received message.

3. Method of managing a service according to claim 2, wherein the service is offered in the network based on a Session Initiation Protocol, and the secret parameter is expected to be included in a SIP contact field of request messages.

4. Method of managing a service according to claim 2 and 3, wherein the type of messages destined to the terminal going through the network function is a SIP request message type, and the terminal performs step /2/ only if the first 4 bytes are uppercase letters.

5. Method of managing a service according to any one of the previous claims 1 to 4, further comprising the following steps at the terminal level:
- detecting a flooding attack; and
- sending a de-register request message (51) to the network function (10) in order to de-register the terminal with the secret parameter.

6. Method of managing a service according to claim 5, wherein a de-register request message (51) indicates information relative to an originator of the flooding attack and/or relative to a cause of flooding attack.

7. Method of managing a service according to claim 5 or 6, wherein at least a type of messages destined to the terminal goes through the network function (10);
said method further comprising the following steps at the terminal level:
/1/ receiving a message of said type (33); and
/2/ if said message does not comprise the secret parameter (34), discarding the received message;
wherein a flooding attack is detected upon reception of a given number of messages discarded at step /2/.

8. Method of managing a communication service offered to at least one terminal (13) in a network comprising a network function (10) for said service, said method comprising the following steps at the network function level:
a) receiving a register request message (22) from the terminal; said register request message indicating a secret parameter; and
b) storing the secret parameter in association with the terminal and sending an acknowledgement of registration (24) to the terminal;
wherein said secret parameter is introduced in messages destined to the terminal.

9. Terminal (13) adapted to use a communication service offered in a network (11) comprising a network function (10) for said service,
said terminal comprising:
- an interface unit (131) adapted to send a register request message (22) to the network function; said register request message indicating a secret parameter associated to the terminal; and to receive an acknowledgement (24) of registration;
- a control unit (132) adapted to control at least some received messages based on said secret parameter.

10. Terminal according to claim 9, at least a type of messages destined to the terminal going through the network function (10), wherein the interface unit (131) is adapted to receive a message of said type (33); and to discard said message, if it does not comprise the secret parameter.

11. Register device (61) adapted to register a terminal (13) for a communication service offered in a network (11);
said register device comprising:
- an interface unit (611) able to receive a register request message (22) from the terminal; said register request message indicating a secret parameter, and to send an acknowledgement of registration (24);
- a memory (612) adapted to store the secret parameter in association with the terminal.

12. Proxy device (62) in a network (11) comprising a register device (61) according to claim 11,
said proxy device cooperating with said register device and comprising:
- a receiving interface (622) adapted to receive a message (31) destined to the terminal (13);
- a modification unit (623) adapted to provide a modified message (33) by introducing into said message (31) the secret parameter associated to the terminal; and
- a transmitting interface (621) adapted to send the modified message (33) to the terminal.

13. Protocol stack adapted for a terminal (13) according to claim 9,
said protocol stack comprising a protection layer (42) between a lower layer (43) and an upper layer (41); a binding table (412) being adapted to store an association of a secret parameter and a public parameter;
said protection layer (42) comprising:
- a register block (411) adapted to introduce said secret parameter into a register request message received from the upper layer and to be sent to a network function through the lower layer;
- a processing block (413) comprising:
- a controlling unit (405) adapted to control if a message received by the terminal includes the secret parameter;
- a recovery unit (406) adapted to replace in said message the secret parameter by said associated public parameter before sending said message to the upper layer.
